# EUROPÄISCHE PATENTSCHRIFT

(11) **EP 1 774 924 B1**
(45) Veröffentlichungstag und Bekanntmachung des Hinweises auf die Patenterteilung: **28.10.2015**
(21) Anmeldenummer: 07002691.9
(22) Anmeldetag: 22.04.2003
(51) Int. Cl.: A46B 3/06, A46D 1/00, A46D 3/04

(54) **Verfahren zur Herstellung eines Bürstenkopfs für eine Zahnbürste**
Method of manufacturing a brush head for a toothbrush
Procédé de fabrication d'une tête de brosse pour brosse à dents

(43) Veröffentlichungstag der Anmeldung: 18.04.2007
(62) Teilanmeldung aus: 03711782.7
(73) Patentinhaber: Trisa Holding AG, 6234 Triengen (CH)
(72) Erfinder: Fischer, Franz, 6234 Triengen (CH); Gross, Peter, 6204 Sempach (DE)
(74) Vertreter: Schaad, Balass, Menzl & Partner AG

(56) Entgegenhaltungen:
- WO-A-2004/049860
- DE-A1- 2 728 672
- DE-A1- 4 441 985
- DE-A1- 19 942 147
- DE-U1- 9 012 603
- JP-A- 11 075 939
- US-A1- 5 305 489
- US-A1- 5 533 227
- US-A1- 6 021 538
- US-B1- 6 371 294

## Beschreibung

Die Erfindung betrifft ein Verfahren zur Herstellung eines Bürstenkopfes mit den Merkmalen von Anspruch 1.

Eine Zahnbürste gemäss der älteren WO 2004/049860A1 weist an einem Ende zugespitzte Borsten aus Polyester von einer Gesamtlänge von 13 bis 18 mm und von einer Länge der Zuspitzung von 4 bis 8 mm auf. Um die Zahnbürste zu produzieren, werden die nicht zugespitzten Abschnitte der Borsten in in einem Muster angeordnete Durchgangslöcher eines Borstenträgers hineingestossen. Der Boden des Borstenträgers wird thermisch geschmolzen und dabei die Borsten am Borstenträger befestigt. Der Borstenträger wird dann in den Kopf der Zahnbürste eingebaut.

Elektrozahnbürsten haben üblicherweise einen Handgriff, in dem ein Motor untergebracht ist, sowie einen in der Regel auswechselbaren Bürstenkopf. Ein Bürstenkopf mit einem drehbeweglich antreibbaren Borstenträger ist beispielsweise aus der DE-U 295 20 230 bekannt. Eine Elektrozahnbürste, deren Bürstenkopf in Vibration versetzt wird, geht aus der WO 01/28452 hervor. Des weiteren sind z.B. aus der CH 421 049 auch Elektrozahnbürsten bekannt, deren Bürstenköpfe nach Art einer Wippe eine Schwenkbewegung um ihre Längsachse ausführen. Bekannte Elektrozahnbürsten haben einen Bürstenkopf, der mit Bündeln aus konventionellen Borsten versehen ist. Diese sind zur Vermeidung von Verletzungen an ihrem Ende abgerundet.

Handzahnbürsten mit einem Borstenfeld, das vollständig aus zugespitzten Filamenten besteht, sind beispielsweise aus der EP-A 0 596 633 und der DE-U 90 12 603 bekannt. Die zugespitzten Filamente dienen zur Behandlung oder Reinigung feiner Strukturen in der Oberfläche des Zahns, z.B. von feinen Rissen, die mit konventionellen zylindrischen Borsten nicht effektiv bearbeitet werden können. Des weiteren können die zugespitzten Filamente dank der schmaleren Spitzen besser in die Zahnzwischenräume eindringen und diese reinigen. Elektrozahnbürsten mit zugespitztem Besatz sind nicht bekannt.

Zugespitzte Borsten reagieren im Bereich der Spitze jedoch schlecht auf mechanischen Abrieb. Bei zu grosser mechanischer Belastung brechen die Spitzen dieser Borsten und können zum einen die Reinigungswirkung nicht mehr entfalten und bergen zum anderen die Gefahr der Verletzung des Zahnfleischs durch die beim Abbrechen entstehenden Kanten und Ecken.

Aus der JP 11 075 939 A sind eine Zahnbürste und ein gattungsgemäßes Verfahren bekannt, bei welcher zugespitzt Filamente von zwei unterschiedlichen Längen in Aussparungen derart eingesetzt sind, dass die Spitzen der Filamente in zwei Ebenen angeordnet sind.

Die US 5,305,489 offenbart eine Zahnbürste mit einem bezüglich eines wegnehmbaren und austauschbaren Bürstenkopfs um 45° abgedrehten Griff. Die Borsten formen eine konturierte Bürstenfläche mit drei bis vier abwechselnd abgerundeten Spitzen und Tälern.

Die EP0972464 offenbart ein Verfahren zur Herstellung von Bürsten, worin eine Vorrichtung angewendet wird, bestehend aus zumindest einem Träger mit Öffnungen, die in Bezug zueinander gemäß einem bestimmten Muster geordnet sind, wobei die in einem Bürstenkörper anzubringenden Faserbündel in diesen Träger gebracht werden können, wobei die ragenden Faserenden möglicherweise erst aneinander befestigt werden können, beispielsweise aneinandergeschmolzen werden können.

Der Erfindung liegt daher die Aufgabe zugrunde, bei minimalen Verletzungspotential des Zahnfleisches die Reinigungswirkung von Zahnbürsten mit zugespitztem Besatz weiter zu verbessern und die Lebensdauer der Borsten zu optimieren.

Die Aufgabe wird gelöst durch ein Herstellungsverfahren mit den Merkmalen von Anspruch 1 Vorteilhafte Weiterbildungen der Erfindung ergeben sich aus den abhängigen Ansprüchen, der Beschreibung und den Zeichnungen.

Die Filamente sind einseitig zugespitzt. Sie können auch zumindest im Bereich der Spitze gefärbt sein. Durch den Farbverlauf ist der Verschleiss der Bürste für dem Benutzer sichtbar, z.B. wenn sich die Farbe mit der Zeit auswäscht.

Die Erfindung wird im folgenden mit Bezug auf die Zeichnungen näher erläutert. Dabei zeigen rein schematisch:
- Fig. 1a, b: drei Zähne in Seitenansicht bzw. Aufsicht zur Darstellung der gewünschten Bewegungen;
- Fig. 2: einen Bürstenkopf mit einem drehbar damit verbundenen Borstenträger mit konventionellen Borsten und zugespitzten Filamenten;
- Fig. 3: einen Bürstenkopf mit einem um die Längsachse schwenkbaren Borstenträger mit konventionellen Borsten und zugespitzten Filamenten;
- Fig. 4: einen Bürstenkopf mit einem vibrierenden Borstenträger mit konventionellen Borsten und zugespitzten Filamenten;
- Fig. 5a-c: einen Bürstenkopf mit einem mehrteiligen Borstenträger;
- Fig. 6a-d: bevorzugte Anordnungen von Bündeln aus zugespitzten Filamenten auf einem Bürstenkopf;
- Fig. 7: einen Borstenträger mit Bündeln aus zugespitzten Filamenten;
- Fig. 8: einen Borstenträger mit Bündeln aus zugespitzten Filamenten und konventionellen Borsten;
- Fig. 9a, b: eine konventionelle bzw. zugespitzte Borste;
- Fig. 10a-e: Bündel aus zugespitzten Filamenten mit verschiedenen Formen;
- Fig. 10f,g: Bündel aus zugespitzten Filamenten mit verschiedenen Profilen;
- Fig. 11a-e: Bürstenköpfe in Seitenansicht mit verschiedenen Profilen der zugespitzten Filamente;
- Fig. 12: einen Bürstenkopf mit Bündeln aus Borsten gemäss Fig. 10a. .

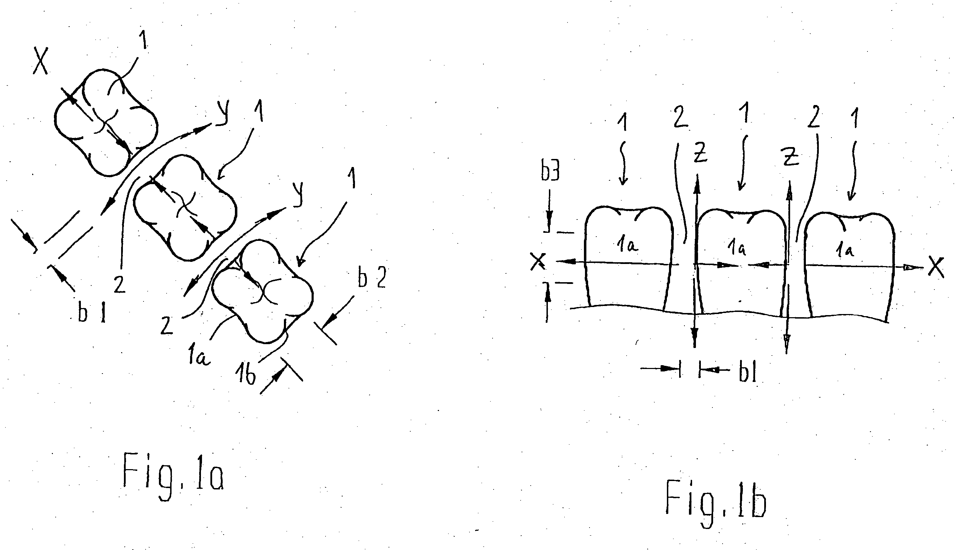

Fig. 1a, b zeigt drei in einer Zahnreihe stehende Zähne 1 mit dazwischen liegenden Interdentalräumen 2 in Seitenansicht bzw. Aufsicht. Beispiele für Bürstenköpfe 3 mit zugespitzten Filamenten 5 gehen aus den übrigen Figuren hervor.

Mit zugespitzten Filamenten 5 werden bevorzugt kleine Bewegungen entlang der Zahnreihe in Richtung X und etwas grössere Bewegungen quer dazu, d.h. in Richtung Y in der Zahnebene bzw. in Richtung Z senkrecht zur Zahnebene, ausgeführt. Zu grosse Bewegungen entlang der X-Richtung sollen vermieden werden, da diese mit einer grossen mechanischen Belastung der zugespitzten Filamente 5 einhergehen (Peitscheneffekt). Damit erstrecken sich die gewünschten Bewegungen der zugespitzten Filamente 5 über die gesamte Breite b1 der Interdentalräume 2 und über einen Streifen der Breite b2 bzw. b3 entlang der Flanken 1a, 1b der Zähne. Die Breite b1 beträgt typischerweise ca. 2 mm, die Breite b2, b3 jeweils ca. 5 mm.

Um im Vergleich zum manuellen Putzen eine verbesserte Reinigungswirkung zu erreichen, wird der Bürstenkopf 3 derart angetrieben, dass die zugespitzten Filamente 5 mehr als 1'000 Putzbewegungen pro Minute vorzugsweise aber mehr als 5'000 Bewegungen erreichen. Beim manuellen Putzen werden deutlich weniger als 1000 Bewegungen während des gesamten Putzvorgangs erreicht. Pro Bewegung legt die Spitze 5a einer zugespitzten Borste eine Distanz d bezüglich dem ruhenden Gebiss zurück (d.h. ohne Überlagerung einer gegebenenfalls manuell ausgeführten Putzbewegung). Um die zugespitzten Filamente 5 bei dieser hochfrequenten Hin- und Herbewegung an den Zahnoberflächen und insbesondere beim Wechsel zwischen Zahnoberfläche 1a, 1b und Zahnzwischenräumen nicht übermässig zu belasten, ist der Weg d der Spitzen 5a der Filamente 5 kleiner als ein vorbestimmter maximaler Weg dₘₐₓ, der vorzugsweise 3 mm beträgt. Diese Werte entsprechen in etwa der Grösse von grossen Zahnzwischenräumen 2, welche somit ohne die Beschädigung der Spitzen 5a optimal gereinigt werden können. Durch die Kontrolle und Beschränkung der Bewegungen der Spitzen 5a wird das Risiko von Verletzungen des Zahnfleischs reduziert.

In einer vorteilhaften Weiterbildung hängt der maximale Weg dₘₐₓ der Spitzen 5a von der Bewegungsrichtung ab, wobei der maximale Weg d_{max,längs} in Längsrichtung L des Bürstenkopfes 3 vorzugsweise geringer ist als der maximale Weg d_{max,quer} quer dazu. Die Längsrichtung L des Bürstenkopfs 3 entspricht im Gebrauch etwa der Richtung X der Zahnreihe, in der die Bewegungen der Borsten wegen des Zahn-Zahn-Übergangs und der damit einhergehenden Belastung der Borsten vorzugsweise einzuschränken sind. Damit wird der Geometrie des Gebisses Rechnung getragen und eine Bewegung entlang der Zahnzwischenräume 2, d.h. in y- und Z-Richtung, mit grösserer Auslenkung als quer dazu zugelassen. Bevorzugt ist d_{max,längs} 3 mm (X-Richtung) und d_{max,quer} 5 mm (Y-, Z-Richtung).

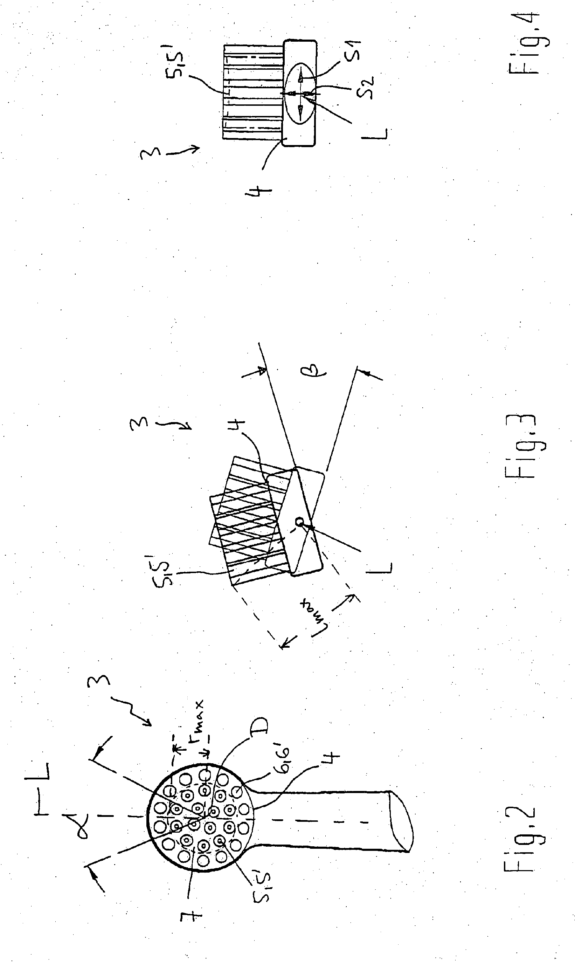

Fig. 2-4 und 5a-c zeigen verschiedene Beispiele für Bürstenköpfe mit einem Borstenfeld aus konventionellen Borsten 6 und zugespitzten Filamenten 5. Die Borsten 5, 6 sind jeweils in Bündeln 5', 6' auf einem Borstenträger 4 angeordnet. Die Bündel 6' aus konventionellen Borsten 6 sind durch einen leeren Kreis und die Bündel 5' aus zugespitzten Filamenten 5 durch einen Kreis mit einem Punkt symbolisiert.

Beim in Fig. 2 dargestellten Bürstenkopf 3 ist der Borstenträger 4 mit dem Bürstenkopf 3 um eine senkrecht zum Borstenträger 4 verlaufende Drehachse D hin- und herdrehbar verbunden. Dazu ist ein geeigneter Antrieb vorhanden (hier nicht dargestellt). Im Betrieb wird ein maximaler Drehwinkel α erreicht. Die zugespitzten Filamente 5 sind derart auf dem Borstenträger angeordnet, dass für den maximalen Abstand rₘₐₓ ihrer Austrittspunkte auf dem Borstenträger von der Drehachse D gilt: rₘₐₓ=dₘₐₓ·180° : (πα) wobei dₘₐₓ der eingangs genannte maximale Weg ist. Genähert (Distanz der Umkehrpunkte statt Länge des Bogens) gilt rₘₐₓ=dₘₐₓ: (2sin(α/2)) . Vorzugsweise gilt dₘₐₓ=3mm.

Derzeit sind Geräte mit Drehwinkeln bis 70° auf dem Markt. Der Durchmesser des Bürstenkopfes 3 beträgt in der Regel weniger als 20 mm. Die Bewegung der Spitzen 5a nimmt mit dem Radius bzw. dem Abstand zur Drehachse zu. Die folgende Tabelle gibt einige Werte für den Weg an, der in Abhängigkeit des Drehwinkels und des Radius berechnet wurde. Die grau hinterlegten Wegangaben gehören zu erfindungsgemäss für dₘₐₓ=3 mm zulässigen Wertepaaren Radius/Drehwinkel (dₘₐₓ=Distanz der Umkehrpunkte).

| Radius(mm) | α=10° | α=20° | α=30° | α=40° | α=50° | α=60° | α=70° |
|---|---|---|---|---|---|---|---|
| 1 | 0,2 | 0,3 | 0,5 | 0,7 | 0,8 | 1,0 | 1,1 |
| 2 | 0,3 | 0,7 | 1,0 | 1,4 | 1,7 | 2,0 | 2,3 |
| 3 | 0,5 | 1,0 | 1,6 | 2,1 | 2,5 | 3,0 | 3,4 |
| 4 | 0,7 | 1,4 | 2,1 | 2,7 | 3,4 | 4,0 | 4,6 |
| 5 | 0,9 | 1,7 | 2,6 | 3,4 | 4,2 | 5,0 | 5,7 |
| 6 | 1,0 | 2,1 | 3,1 | 4,1 | 5,1 | 6,0 | 6,9 |
| 7 | 1,2 | 2,4 | 3,6 | 4,8 | 5,9 | 7,0 | 8,0 |
| 8 | 1,4 | 2,8 | 4,1 | 5,5 | 6,8 | 8,0 | 9,2 |
| 9 | 1,6 | 3,1 | 4,7 | 6,2 | 7,6 | 9,0 | 10,3 |
| 10 | 1,7 | 3,5 | 5,2 | 6,8 | 8,5 | 10,0 | 11,5 |

Die Tabelle zeigt, dass bei kleinen Drehwinkeln im Prinzip der ganze Bürstenkopf 3 mit zugespitzten Borsten 5 besetzt werden kann und dass bei grossen Drehwinkeln nur ein zentrales Segment 7 mit zugespitzten Borsten 5 besetzt werden sollte.

Fig. 3 zeigt einen Bürstenkopf 3, der im Betrieb um seine Längsachse L verschwenkt wird, so dass der Bürstenkopf 3 eine wippende Seitwärtsbewegung ausführt. Der Bürstenkopf 3 überstreicht dabei einen Winkel β. Für den maximalen Abstand lₘₐₓ der Spitzen der zugespitzten Filamente von der Schwenkachse L gilt lₘₐₓ=dₘₐₓ·180°: (πβ) bzw. lₘₐₓ=dₘₐₓ: (2sin (β/2)) (Distanz der Umkehrpunkte), wobei dₘₐₓ·der eingangs genannte maximale Weg ist. Vorzugsweise ist dₘₐₓ=3mm.

Im Zusammenhang mit zugespitzten Borsten 5 bietet sich die wippende Seitwärtsbewegung besonders an. Mit diesem Zahnbürstentyp bewegen sich die zugespitzten Borsten 5 beim Gebrauch entlang den Interdentalräumen 2. Die für die Borsten und Zahnfleisch weniger erwünschte Bewegungsrichtung bleibt für die zugespitzten Borsten 5 aus. Bei dieser Bewegung sollte der maximal zurückgelegte Weg der Spitzen ebenfalls kleiner 3 mm sein. Der Drehwinkel kann somit anhand der folgenden Tabelle in Abhängigkeit des Abstands der Spitzen von der Schwenkachse festgelegt werden. Die grau hinterlegten Wegangaben gehören zu erfindungsgemäss für dₘₐₓ=3 mm zulässigen Wertepaaren Abstand/Schwenkwinkel. Bei einem mittleren Abstand von 12 mm sollte der Drehwinkel des Bürstenkopfes nicht grösser 15° gewählt werden.

| Abstand (mm) | β=10° | β=15° | β=20° | β=25° | β=30° | β=35° |
|---|---|---|---|---|---|---|
| 9 | 1,6 | 2,3 | 3,1 | 3,9 | 4,7 | 5,4 |
| 10 | 1,7 | 2,6 | 3,5 | 4,3 | 5,2 | 6,0 |
| 11 | 1,9 | 2,9 | 3,8 | 4,8 | 5,7 | 6,6 |
| 12 | 2,1 | 3,1 | 4,2 | 5,2 | 6,2 | 7,2 |
| 13 | 2,3 | 3,4 | 4,5 | 5,6 | 6,7 | 7,8 |
| 14 | 2,4 | 3,7 | 4,9 | 6,1 | 7,2 | 8,4 |
| 15 | 2,6 | 3,9 | 5,2 | 6,5 | 7,8 | 9,0 |

Fig. 4 zeigt rein schematisch einen Bürstenkopf 3, der in zwei Richtungen S1, S2 quer zur Längsrichtung L vibriert. Bei dieser Bewegungsvariante hat die Bürstenkopfgeometrie weniger Einfluss auf die Auslenkung der konventionellen und zugespitzten Borsten 5,6. Die Grösse der Auslenkung kann durch Wahl von Strom, Motor und/oder Schwingungsgebern bestimmt werden. Durch einen speziellen Aufbau des Bürstengriffes, z.B. Versteifung in vertikaler Richtung, und zusätzlichen Dämpfungsmassnahmen kann die Richtung der Auslenkung beeinflusst werden. Da die Auslenkung des Bürstenkopfes 3 und damit der Spitzen der zugespitzten Filamente 5 vorzugsweise den Interdentalräumen 2 folgt, soll die Zahnbürste vorzugsweise eine grössere seitliche Auslenkung in Richtung S1 als eine vertikale Auslenkung in Richtung S2 aufweisen. Auslenkungen von weniger als 3 mm ergeben auch hier eine sehr schonende Wirkung und eine Stimulierung des Zahnfleisches.

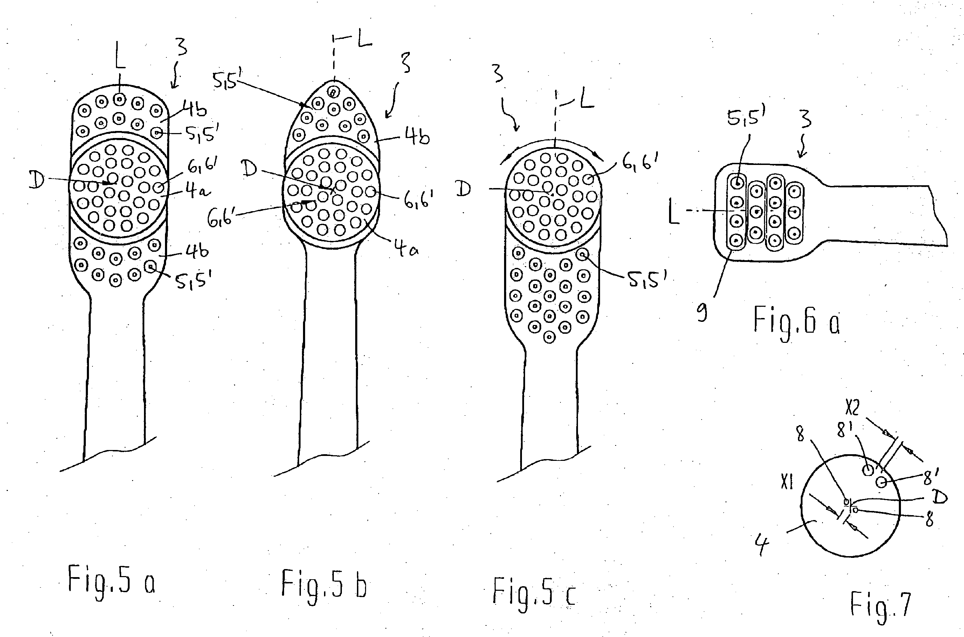

Fig. 5a-c zeigen Bürstenköpfe 3, bei denen eine Rotationsbewegung mit anderen Bewegungstypen kombiniert wird. Wird mit einer Elektrozahnbürste eine mechanische Bewegung, z.B. Rotation, ausgeführt, entstehen auf jeden Fall auch Vibrationen. In den vorliegenden Beispielen ist der Borstenträger 4 mehrteilig. Ein rundes erstes Trägerelement 4a ist um die Drehachse D drehbar mit dem Bürstenkopf 3 verbunden (vgl. Fig. 2). Es ist mit konventionellen Borsten 6 besetzt. Mindestens ein weiteres Trägerelement 4b ist fest mit dem Bürstenkopf 3 verbunden und mit zugespitzten Filamenten 5 besetzt. Er wird bei Rotation des Teils 4a in Vibration versetzt. In Fig. 5a befindet sich dieses weitere Trägerelement 4b in Längsrichtung L vor und hinter dem rotierenden Trägerelement 4a, in Fig. 5b nur hinter und in Fig. 5c nur vor diesem. Das bewegte Trägerelement 4a mit konventionellen Borsten 6 übernimmt die Flächenreinigung und das mitvibrierende, nur indirekt mechanisch bewegte Trägerelement 4b mit den zugespitzten Borsten 5 die Interdentalreinigung und zur Reinigung kleinster Strukturen. Statt das erste Trägerelement 4a zu drehen, kann es auch um die Längsachse verschwenkt werden.

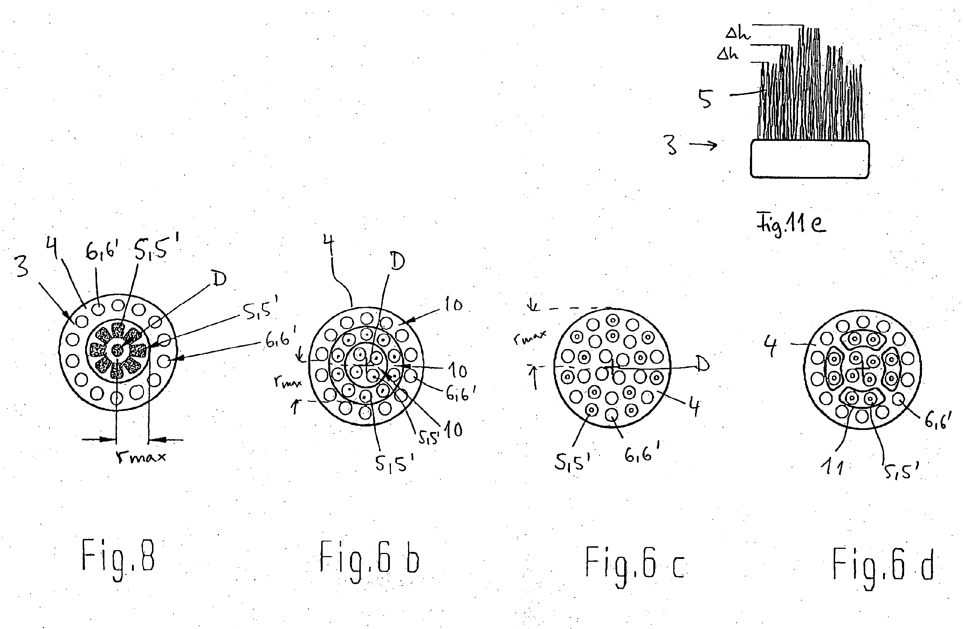

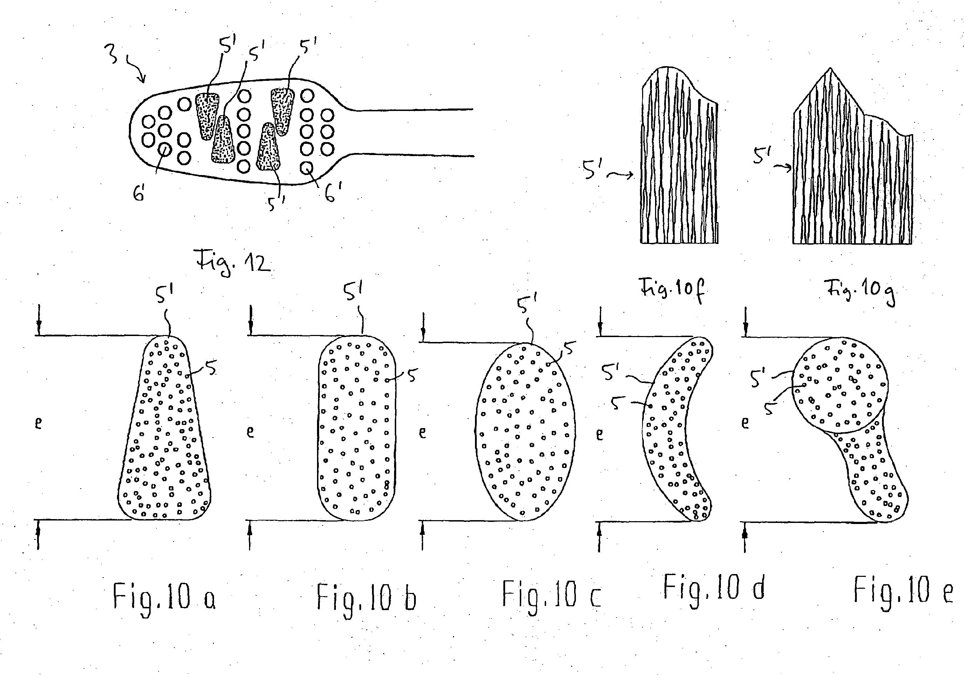

Fig. 6a-d zeigen Beispiele für die Anordnung der zugespitzten Filamente 5 auf dem Borstenträger 4. Die zugespitzten Filamente 5 sind zunächst zu Bündeln 5' zusammengefasst. Diese sind vorliegend im Querschnitt kreisförmig, können aber auch eine andere Form haben, z.B. wie in Fig. 10a-e dargestellt. Die Bündel 5' sind beim Bürstenkopf 3 gemäss Fig. 6a zu Reihen 9 zusammengefasst, die quer zur Längsrichtung L verlaufen. Diese Anordnung wird bevorzugt bei um die Längsachse L verschwenkbaren oder in dieser Richtung vibrierenden Borstenträgern 4 eingesetzt, da die Reihen 9 dort mit der Laufrichtung der Bündel 5' übereinstimmen. Beim Beispiel aus Fig. 6b sind die Borstenbündel 5' auf Kreisbögen 10 angeordnet. Diese Anordnung wird bevorzugt bei rotierenden Borstenträgern 4 eingesetzt. Es sind zwei innere Kreise aus Borstenbündeln 5' mit zugespitzten Filamenten 5 vorhanden, deren maximaler Radius rₘₐₓ ist. In beiden Fällen kann somit der Wirkbereich der zugespitzten Borsten 5 räumlich gut eingegrenzt werden.

Fig. 6c zeigt ein Beispiel für ein Borstenfeld mit gemischt angeordneten Bündeln 5', 6' aus zugespitzten und normalen Borsten 5, 6 auf einem runden Borstenträger 4 mit Radius rₘₐₓ. Das gemischte Borstenfeld hat den Vorteil, dass die zugespitzten Borsten 5 mehr Bewegungsspielraum haben und beim Gebrauch trotz Verbiegen an den Zahnstruktüren nicht untereinander verklemmen. Grundsätzlich sollte den zugespitzten Borsten 5 mehr Bewegungsspielraum zur Verfügung stehen als den normalen Borsten 6. Insbesondere im Grenzbereich, d.h. für Anordnungen, in denen die Borstenspitzen etwa die maximale Distanz dₘₐₓ zurücklegen, ist eine solche Mischung mit normalen Borsten vorteilhaft.

Fig. 6d zeigt ein Borstenfeld, bei dem die Bündel 5' aus zugespitzten Borsten 5 in kreisbogenförmigen Segmenten 11 angeordnet sind. Diese Anordnung entspricht im wesentlichen Fig. 6b und eignet sich ebenfalls für rotierende Bürsten.

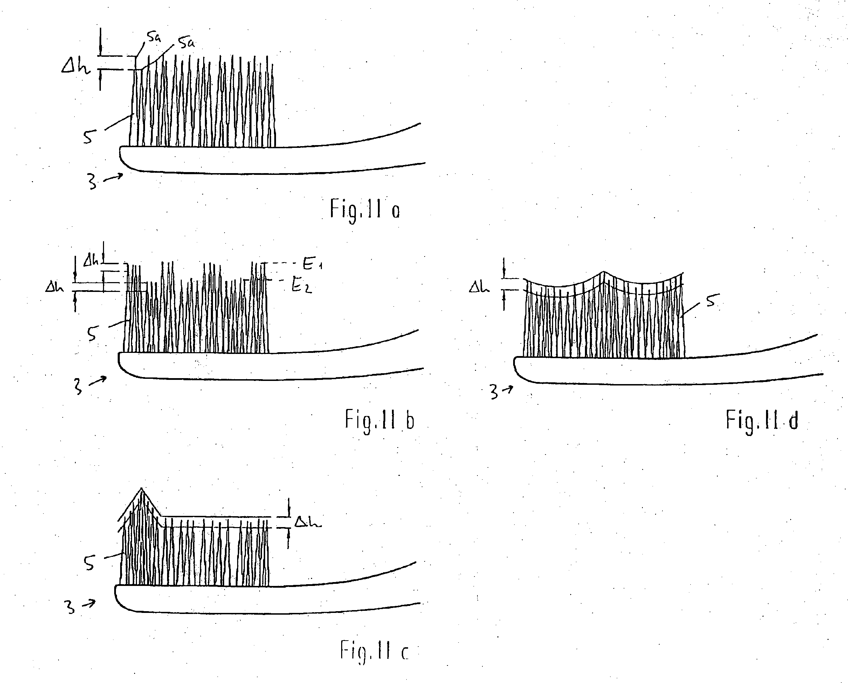

Statt Borstenbündel 5' mit rundem Querschnitt wie beschrieben in Gruppen (Reihen, Kreisen, Segmenten) anzuordnen, können auch Borstenbündel 5' mit einem entsprechend angepassten Querschnitt verwendet werden (siehe Fig. 11a-e).

Damit sich die zugespitzten Filamente 5 frei bewegen können und die Interdentalräume 2 nicht verstopft werden, sind die einzelnen Bündel 8 bevorzugt genügend voneinander beabstandet. Da die Spitzen bei gewissen Ausführungsformen in Abhängigkeit von ihrem Ort auf dem Borstenträger 4 unterschiedliche Distanzen zurücklegen, wird der minimale Lochabstand x zwischen benachbarten Bündeln 8 in Abhängigkeit des zurückgelegten Wegs festgelegt. Fig. 7 zeigt ein Beispiel für einen rotierenden Borstenträger 4, bei dem der Übersichtlichkeit halber nur ein zentral angeordnetes Paar von Borstenbündeln 8 und ein peripher angeordnetes weiteres Paar von Borstenbündeln 8' gezeigt ist. Die minimalen Abstände x1 nahe der Rotationsachse D sind kleiner als die minimalen Abstände x2 weiter entfernt von der Rotationsachse D.

Da sich bei gewissen Ausführungsformen zugespitzter Besatz nur an geeigneter Position auf der Bürstenkopfoberfläche anbietet, können an den nicht geeigneten Positionen andere Filamenttypen eingesetzt werden. Konventionell abgerundete Borsten, die z.B. aus Polyester PBT oder Polyamid PA bestehen, können insbesondere zur Flächenreinigung der Zahnoberfläche eingesetzt werden. Falls zusätzlich ein Massageeffekt des Zahnfleisches erwünscht ist, können zusätzlich weiche gummielastische Elemente in Form von Borsten, Lamellen oder anderen Gebilden aus thermoplastischem Elastomer TPE gespritzt oder eingesetzt werden. Fig. 8 zeigt ein Beispiel für einen Borstenträger 4 mit einem solchen gemischten Borstenfeld aus zugespitzten Filamenten 5 innerhalb eines zentralen Feldes mit Radius rₘₐₓ und peripher angeordneten konventionellen Borstenbündeln 6.

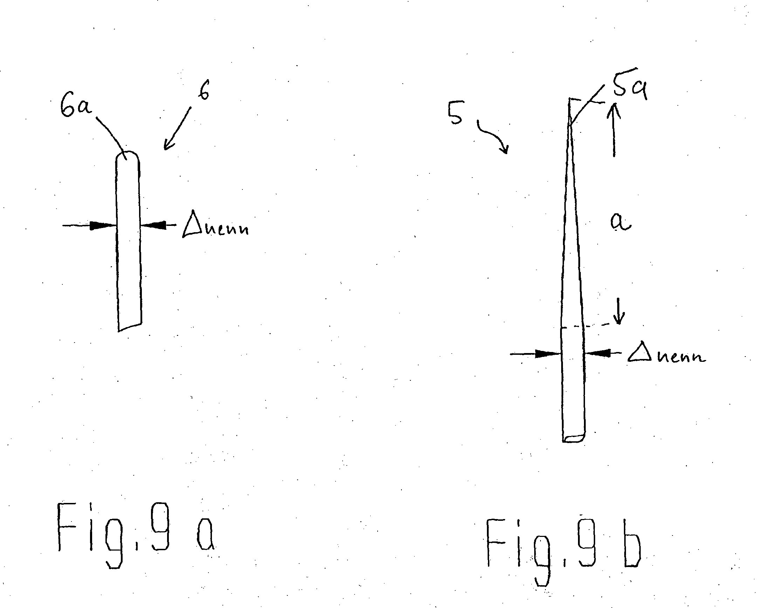

Fig. 9a, b erläutert die Dimensionierung der konventionellen bzw. zugespitzten Borsten 5, 6. Die in Fig. 9a skizzierten konventionellen Borsten 6 haben über ihre Länge einen im wesentlichen konstanten Nenndurchmesser Δₙₑₙₙ (Durchmesser an der dicksten Stelle der Borste), der z.B. 0,15 bis 0,25 mm beträgt. Die Spitze 6a der Borste ist abgerundet.

Um das Verletzungspotential bei Zahnbürsten mit hochfrequenten Bewegungen zu minimieren und deren Lebensdauer zu maximieren, sind besondere Anforderungen an die Geometrie und die Beschaffenheit der zugespitzten Filamente 5 gestellt. Die in Fig. 9b skizzierten zugespitzten Borsten 5 haben über einen Bereich ihrer Länge ebenfalls einen konstanten Durchmesser, z.B. ebenfalls einen Nenndurchmesser von 0,15 - 0,25 mm. Zur Spitze 5a hin verjüngt sich die Borste 5, beginnend bei einem Abstand a von der Spitze 5a. Gemessen ab der Spitze 5a entspricht der Durchmesser an der entsprechenden Stelle beispielsweise folgenden Werten:

| Abstand (mm) | % des Nenndurchmessers | |
|---|---|---|
| | Mittelwert | Toleranzbereich |
| 0,1 | 8% | 5-15% |
| 1 | 25% | 15-35% |
| 2 | 45% | 30-60% |
| 3 | 60% | 50-80% |
| 4 | 75% | 60-90% |
| 5 | 80% | 70-90% |
| 6 | 85% | > 75% |
| 7 | 90% | >80% |

Um eine genügende Flexibilität der Filamente zu erreichen wird deren Länge ab Austritt aus dem Bürstenkopf zwischen 7 und 13 mm gewählt. Um bei einer hochfrequenten Bewegung genügend Stabilität der einzelnen Filamente zu bewahren, wird der Nenndurchmesser über einen Grossteil der Länge auf über 75% belassen. Die oben aufgeführte Tabelle zeigt, dass die Zuspitzung der Filamente zum überwiegenden Teil auf den letzten 4 bis 5 mm erfolgen. Mit dieser Ausgestaltung kann die Spitze 5a kleinste Fissuren und die Interdentalräume 2 bei genügender Filamentstabilität optimal erreichen.

Für die zugespitzten Borsten wird Polyamid vorzugsweise aber Polyester (PBT) eingesetzt. Der Zuspitzungsprozess basiert auf der Reduktion des Durchmessers mittels einem chemischen Prozess. Je nach Länge des Aufenthaltes der Borste in der chemischen Substanz baut sich der Kunststoff ab und verringert sich der Durchmesser. Die Form der Spitze ist so beeinflussbar.

Fig. 10a-e zeigt Beispiele für die Form von Bündeln 5' aus zugespitzten Filamenten 5. Ein derartiges Bündel 5' muss nicht unbedingt eine runde Form haben. Es kommen im wesentlichen dreieckige (Fig. 10a), im wesentlichen rechteckige (Fig. 10b), elliptische (Fig. 10c), kreisbogenförmige (Fig. 10d) oder sonstige Formen (Fig. 10e) in Frage. Die länglichen Formen gemäss Fig. 10a-c bieten sich insbesondere für verschwenkbare Zahnbürsten an und können statt der Anordnung runder Borstenbündel in Reihen eingesetzt werden (vgl. Fig. 12, in der ein gemischtes Borstenfeld aus normalen Borstenbündeln 6' mit rundem Querschnitt und Bündeln 5' aus zugespitzten Borsten 5 mit der in Fig. 10a dargestellten Form gezeigt ist). Die in Fig. 10d gezeigte Form ist besonders vorteilhaft für rotierende Zahnbürsten.

Die grösste Ausdehnung e beträgt vorzugsweise etwa 3 mm und entspricht damit einem grossen Interdentalabstand. Werden zu viele Filamente pro Bündel 5' zusammengefasst, kann dies zu einer unnötigen Versteifung der einzelnen Filamente 5 kommen und das Eindringen in die Interdentalräume 2 erschweren. Ein Bündel 5' enthält daher vorzugsweise weniger als 80, besonders bevorzugt weniger als 50 zugespitzte Spitzen 5a der Filamente 5. Dabei kann je nach Herstellungstechnik jedes Filament eine oder zwei zugespitzte Spitzen 5a haben. Gewisse Filamente haben auch eine runde und eine spitze Spitze 5a.

Fig. 10f+g zeigen Beispiele für das Höhenprofil der Borstenbündel 5' aus Fig. 11d bzw. Fig. 11e. Derartige nicht konstante Höhenprofile werden bevorzugt im AFT- oder IMT-Verfahren realisiert.

Fig. 11a-e zeigen Bürstenköpfe 3 in Seitenansicht, bei denen die Spitzen 5a der zugespitzten Filamente 5 verschiedene Profile ausbilden. Fig. 11a-d beziehen sich auf verschwenkbare Bürstenköpfe, Fig. 11e auf einen rotierenden Bürstenkopf.

Fabrikationstechnisch bedingt ist das in Fig. 11a gezeigte flache Profil am einfachsten herzustellen. Dabei wird unter Verwendung konventioneller Stanztechnologie nur eine Filamentgrundlänge verwendet. Etwa 80% der Filamentenden sind innerhalb eines Höhenbereichs Δh von 4 mm Breite positioniert. Unterschiedliche Filamentlängen innerhalb dieser Grenzen sind bis zu einem gewissen Grad erwünscht, da sie damit eine interdentale Penetration einfacher gewährleisten, als bei einer exakt gleichen Länge, wie sie beim Schneiden von konventionellen Borsten entsteht. Einzelne, massiv vorstehende Filamente sollten allerdings vermieden werden, da diese insbesondere bei einer hochfrequenten Bewegung die Gefahr von Verletzung des Zahnfleisches bergen.

Fig. 11b zeigt einen Bürstenkopf, bei dem mittels konventioneller Stanztechnologie mit zwei verschiedenen Grundlängen der zugespitzten Borsten eine von einer Ebene abweichende Profilform erzeugt ist. Üblicherweise sind beide Enden der Filamente zugespitzt. Letztere werden zum Beborsten U-förmig gebogen. Aus diesem Grund kann man den zugespitzten Besatz nicht schneiden und ist mit dieser Technologie auf verschiedene Ebenen, hier Ebenen E1 und E2 limitiert. Innerhalb der Ebenen E1, E2 sind wiederum Höhenvariationen innerhalb des etwa 4 mm breiten Höhenbereichs Δh möglich. Mehr Freiheiten ergeben sich bei einseitig zugespitzten Filamenten.

Werden aus den bereits genanten Gründen verschiedene Filamenttypen kombiniert, sind die zugespitzten Filamente 5 zur Interdentalreinigung bevorzugt länger als konventionell abgerundete Borsten oder Massageelemente. Das Einsetzen der unterschiedlichen Borstentypen in den Borstenträger erfolgt vorzugsweise bei gleichzeitigem Verdrängen der jeweils anderen Borstensorte(n). Alternativ können die Borstenträger 4 mehrteilig sein, separat beborstet und anschliessen zusammengefügt werden.

Zur Herstellung der erfindungsgemässen Bürstenköpfe 3 bietet sich vor allem das AFT (Anchor Free Tufting) oder IMT (In Mould Tufting) Verfahren an. Das AFT-Verfahren ist beispielsweise in der EP-A 0 972 464 beschrieben. Das IMT-Verfahren ist beispielsweise in der EP-A 0 795 711 und der EP-A 0 346 646 beschrieben. Die zugespitzten Filamente 5 werden in diesem Fall, anders als beim konventionellen Stopfen, nur einseitig zugespitzt der AFT oder IMT Anlage zugeführt. Die Länge der Filamente beträgt zwischen 10 und 20 mm. Vorzugsweise werden die Filamente mit den Spitzen nach unten in den Stopfkasten eingeführt. Eine spätere Umorientierung innerhalb der AFT oder IMT Anlage erübrigt sich somit. Die Filamente werden durch die schiebenden Mittel auf der zugespitzten Seite durch den Borstenträger (bei IMT durch die Transporteinsätze) gestossen. Der Borstenträger weist dazu Ausnehmungen für die Borsten auf. Die nicht zugespitzte Seite wird geschnitten und anschliessend wie bekannt aufgeschmolzen. Falls der Borstenträger nicht einstückig mit dem Bürstenkopf ist, werden die beiden Teile anschliessen vorzugsweise mittels Ultraschallschweissen miteinander verbunden.

Das AFT oder IMT Verfahren ermöglicht eine vereinfachte Herstellung der zugespitzten Filamente, da diese nur einseitig zugespitzt werden müssen. Des weiteren können durch entsprechende Ausgestaltung der schiebenden Mittel die einzelnen Bündel profiliert werden, z.B. zur besseren Interdentalpenetration. Beispiele hierfür sind in Fig. 11c-e bzw. auch in Fig. 10f+g (Profilierung der einzelnen Bündel) gezeigt. Dies ist mit der konventionellen Stopftechnologie nicht möglich. Da die Filamente nach dem Profilieren geschnitten werden, muss nur eine Filamentlänge geführt werden. Die Borsten können auf die erwünschte Länge zugeschnitten werden. Im Gegensatz dazu müssen bei konventioneller Stopftechnologie mehrere Stofflängen eingesetzt werden, um eine von der Ebene abweichende Topographie zu erstellen.

Das AFT- und IMT-Verfahren hat somit grosse Vorteile zur Herstellung der erfindungsgemässen Zahnbürsten, da es eine weitgehend beliebige Form der Borstenbündel ermöglicht. Somit kann der von den Spitzen im Gebrauch zurückgelegte Weg besonders gut kontrolliert werden. Das Herstellungsverfahren kann vorteilhaft auch zur Herstellung von manuellen Zahnbürsten eingesetzt werden.

## Patentansprüche

1. Verfahren zur Herstellung eines Bürstenkopfs für eine Zahnbürste, insbesondere eine Elektrozahnbürste, bei welcher zugespitzte Filamente (5) in Bündeln (5') in Aussparungen eines Borstenträger (4) angeordnet werden, die Spitzen (5a) der zugespitzten Filamente (5) wenigstens bereichsweise ein von einer Ebene abweichendes Höhenprofil erzeugen, und bei dem zugespitzte Filamente (5) aufgeschmolzen werden, **dadurch gekennzeichnet, dass** einseitig zugespitzte Filamente (5) mit einer Länge von 10 - 20 mm verwendet und durch die Aussparungen im Borstenträger (4) hindurch gestossen werden, die zugespitzten Filamente (5) auf ihrer der Spitze (5a) abgewandten Seite geschnitten und die den Spitzen (5a) abgewandten Enden der zugespitzten Filamente (5) aufgeschmolzen werden.

2. verfahren nach Anspruch 1, **dadurch gekennzeichnet, dass** die zugespitzten Filamente (5) durch schiebende Mittel auf der zugespitzten Seite der Filamente (5) durch den Borstenträger oder durch einen Transporteinsatz gestossen werden.

3. Verfahren nach Anspruch 2, dass die schiebenden Mittel die einzelnen Bündel (5') profilieren.

4. Verfahren nach Anspruch 3, **dadurch gekennzeichnet, dass** die zugespitzten Filamente (5) nach dem Profilieren auf ihrer den Spitzen (5a) abgewandten Seite geschnitten und aufgeschmolzen werden.

5. verfahren nach einem der Ansprüche 1 oder 2, **dadurch gekennzeichnet, dass** einseitig zugespitzte Filamente (5) nur einer Filamentlänge verwendet werden und die zugespitzten Filamente (5) auf die erwünschte Länge zugeschnitten werden.

6. Verfahren nach einem der Ansprüche 1 bis 5, **dadurch gekennzeichnet, dass** der Borstenträger (4) im AFT-oder IMT-Verfahren beborstet wird.

7. Verfahren nach Anspruch 1, **dadurch gekennzeichnet, dass** zugespitzte Filamente (5) verwendet werden, die über einen Bereich ihrer Länge einen konstanten Nenndurchmesser von 0,15 - 0,25 mm aufweisen und die sich, beginnend bei einem bestimmten Abstand (a) von der Spitze (5a), zur Spitze (5a) hin verjüngen.

8. Verfahren nach Anspruch 7, **dadurch gekennzeichnet, dass** zugespitzte Filamente (5) verwendet werden, deren Durchmesser, gemessen in einem Abstand von 1 mm von der Spitze (5a), 15 - 35% des Nenndurchmessers beträgt.

9. Verfahren nach Anspruch 7, **dadurch gekennzeichnet, dass** zugespitzte Filamente (5) verwendet werden, deren Durchmesser, gemessen in einem Abstand von 2 mm von der Spitze (5a), 30 - 60% des Nenndurchmessers beträgt.

10. Verfahren nach Anspruch 7, **dadurch gekennzeichnet, dass** zugespitzte Filamente (5) verwendet werden, deren Durchmesser, gemessen in einem Abstand von 4 mm von der Spitze (5a), 60 - 90% des Nenndurchmessers beträgt.

## Claims

1. Method for producing a brush head for a toothbrush, in particular an electric toothbrush, in which pointed filaments (5) are arranged in clusters (5') in clearances of a bristle carrier (4), the tips (5a) of the pointed filaments (5) create at least in certain areas a height profile deviating from a plane, and in which pointed filaments (5) are melted, **characterized in that** at one end pointed filaments (5) with a length of 10 - 20 mm are used and pushed through the clearances in the bristle carrier (4), the pointed filaments (5) are cut on the side remote from the tip (5a) and the ends remote from the tips (5a) of the pointed filaments (5) are melted.

2. Method according to claim 1, **characterized in that** the pointed filaments (5) are pushed by pushing means on the pointed side of the filaments (5) through the bristle carrier or through a transporting insert.

3. Method according to claim 2, **characterized in that** the pushing means profile the individual clusters (5').

4. Method according to claim 3, **characterized in that** the pointed filaments (5) are cut and melted on the side remote from the tips (5a) after profiling.

5. Method according to one of the claims 1 or 2, **characterized in that** at one end pointed filaments (5) of one filament length are used and the pointed filaments (5) are cut to the desired length.

6. Method according to one of the claims 1 to 5, **characterized in that** the bristle carrier (4) is tufted according to the AFT method or to the IMT method.

7. Method according to claim 1, **characterized in that** pointed filaments (5) are used having a constant nominal diameter of 0,15 - 0,25 mm over a region of their length and tapering beginning at a certain distance (a) from the tip (5a) toward the tip (5a).

8. Method according to claim 7, **characterized in that** pointed filaments (5) are used having a diameter, measured at a distance of 1 mm from the tip (5a), of 15 - 35% of the nominal diameter.

9. Method according to claim 7, **characterized in that** pointed filaments (5) are used having a diameter, measured at a distance of 2 mm from the tip (5a), of 30 - 60% of the nominal diameter.

10. Method according to claim 7, **characterized in that** pointed filaments (5) are used having a diameter, measured at a distance of 4 mm from the tip (5a), of 60 - 90% of the nominal diameter.

## Revendications

1. Procédé pour la fabrication d'une tête de brosse pour une brosse à dents, en particulier une brosse à dents électrique, dans lequel des filaments pointus (5) sont disposés en faisceaux (5') dans des évidements d'un support de poils (4), les pointes (5a) des filaments pointus (5) produisant au moins dans certaines zones un profil de hauteurs qui diffère d'un plan, et dans lequel des filaments pointus (5) sont fondus, **caractérisé en ce que** des filaments pointus (5) d'un côté avec une longueur de 10 - 20 mm sont utilisés et poussés à travers les évidements dans le support de poils (4), les filaments pointus (5) sont coupés du côté éloigné de la pointe (5a) et les extrémités éloignées des pointes (5a) des filaments pointus (5) sont fondus.

2. Procédé selon la revendication 1, **caractérisé en ce que** les filaments pointus (5) sont poussés par des moyens de poussée du côté pointu des filaments (5) à travers le support de poils ou à travers un insert de transport.

3. Procédé selon la revendication 2, **caractérisé en ce que** les moyens de poussée profilent les faisceaux (5') individuellement.

4. Procédé selon la revendication 3, **caractérisé en ce que** les filaments pointus (5) sont coupés et fondus du côté éloigné des pointes (5a) après le profilage.

5. Procédé selon l'une des revendications 1 ou 2, **caractérisé en ce que** des filaments pointus (5) d'un côté d'une seule longueur de filament sont utilisés et les filaments pointus (5) sont coupés à la longueur souhaitée.

6. Procédé selon l'une des revendications 1 à 5, **caractérisé en ce que** le support de poils (4) est garni selon le procédé AFT ou IMT.

7. Procédé selon la revendication 1, **caractérisé en ce que** sont utilisés des filaments pointus (5) qui présentent sur une partie de leur longueur un diamètre nominal constant de 0,15 - 0,25 mm et qui se rétrécissent en partant d'une certaine distance (a) de la pointe (5a) vers la pointe (5a).

8. Procédé selon la revendication 7, **caractérisé en ce que** sont utilisés des filaments pointus (5) dont le diamètre, mesuré à une distance de 1 mm de la pointe (5a), s'élève à 15 - 35% du diamètre nominal.

9. Procédé selon la revendication 7, **caractérisé en ce que** sont utilisés des filaments pointus (5) dont le diamètre, mesuré à une distance de 2 mm de la pointe (5a), s'élève 30 - 60% du diamètre nominal.

10. Procédé selon la revendication 7, **caractérisé en ce que** sont utilisés des filaments pointus (5) dont le diamètre, mesuré à une distance de 4 mm de la pointe (5a), 60 - 90% du diamètre nominal.
